# EUROPEAN PATENT SPECIFICATION

(11) **EP 3 334 960 B1**
(45) Date of publication and mention of the grant of the patent: **11.03.2020**
(21) Application number: 16834700.3
(22) Date of filing: 09.08.2016
(51) Int. Cl.: F16H 57/04, F03D 1/00, F16N 31/00, F01M 11/04

(54) **FLEXIBLE TWIN-CONTAINER FOR OIL CHANGE**
FLEXIBLER DOPPELBEHÄLTER FÜR ÖLWECHSEL
RÉCIPIENT DOUBLE SOUPLE POUR CHANGEMENT D'HUILE

(30) Priority: 10.08.2015 US 201562202941 P; 10.08.2015 DK 201570509
(43) Date of publication of application: 20.06.2018
(73) Proprietor: Ocean Team Group A/S, 6700 Esbjerg (DK)
(72) Inventor: THOMSEN, Jens Peder Høg, 6800 Varde (DK)
(74) Representative: Nielsen, Leif
(86) International application number: PCT/DK2016/050268
(87) International publication number: WO 2017/025102

(56) References cited:
- EP-A1- 2 503 148
- WO-A1-2014/169918
- WO-A1-2014/169918
- US-A- 4 775 564
- US-A1- 2009 283 363
- US-A1- 2009 283 363
- US-B1- 6 179 018

## Description

### FIELD OF THE INVENTION

The present invention relates to flexible container for liquids, to use thereof for oil change and to a method for changing oil, in particular changing oil in a gearbox of a wind turbine. Further, the invention relates to a system for changing gear oil of an off-shore wind turbine.

### BACKGROUND OF THE INVENTION

Today oil conversion (oil change) on gearbox in an offshore wind turbine generator is often performed in the following way:
- Empty cans are lifted up from the (service-) vessel and into the nacelle of the wind turbine; often by several hoist operations.
- Cans are filled with the old oil manually, resulting in heavy work and risk of splashes.
- Cans with old oil are hoisted down to the (service-) vessel with many hoist operations.
- Cans with new oil are hoist up into nacelle with many hoist operations.
- New oil is manually filled into the gearbox.
- Empty cans are hoisted down to the vessel.

A complete hoist operation (lowering and lifting) can take from 10 to 40 minutes in an offshore wind turbine, depending of hoist / crane in the Nacelle. Every hoist operation is considered as a dangerous operation because of the risk of falling objects. A drop of a can with oil is also an environmental issue because of the risk of oil pollution.

An oil change method is known from US2009/0283363.

Another method is disclosed in International Patent Application WO2014/169918 by Ocean Team Group AS, where an umbilical is lifted up from a sea vessel to the nacelle for changing oil.

This system requires the presence of the sea vessel during the entire procedure for changing oil, which is relatively costly and which requires the weather to be stable and relatively calm during the oil changing process.

Accordingly, there is a need for improvement.

### DESCRIPTION / SUMMARY OF THE INVENTION

It is therefore the objective of the invention to provide an improvement in the art. Particularly, it is an objective to provide an alternative method for changing oil in gearboxes of wind turbines, especially offshore wind turbines. An objective is also to provide easier, more cost effective, and safer way for changing gearbox oil in a wind turbine. This objective is achieved with a method as explained in the following. It is also achieved with the use of special tanks designed for this purpose as explained in the following.

In short, the invention is as follows: For oil change in a gearbox of a wind turbine, a flexible, collapsible oil tank is provided with an upper chamber for receiving the used oil from the gearbox and a lower chamber for providing clean oil. After draining the used oil from the gearbox into the upper chamber of the oil tank and during the process of filling new oil into the gearbox from the lower chamber of the oil tank, the weight of the used oil in the upper chamber presses the clean oil out of the lower chamber, which minimizes the risk for cavitation of the pumping unit that is used to pump the new oil up into the gearbox in the nacelle. For offshore wind turbines, the oil tank is brought by a sea vessel to the wind turbine and fetched again after oil change. Optionally, the necessary pumping unit and hoses for draining and filling are also brought and fetched by the vessel.

The method comprises a number of steps for changing oil in the gearbox of a wind turbine, as explained in more detail in the following. The wind turbine comprises a tower and a nacelle, a rotor, and an electricity generator, the rotor being connected to the generator through the gearbox. If the wind turbine is an offshore wind turbine, it typically also comprises a platform at the lower part of the tower, however, the platform being located above sea level and slightly higher than the height of typical waves.

According to the invention, at the wind turbine, a transportable oil tank is provided that is made of a flexible and collapsible material. It comprises an upper chamber that is provided on top of a lower chamber for exerting gravity pressure on the lower chamber when the upper chamber contains used oil. This gravity pressure is used to press out clean oil of the lower container. Clean lubricating gearbox oil is filled into the lower chamber prior, during, or after transporting the oil tank to the wind turbine, typically, however, prior to transportation. Used oil is drained from the gearbox through a drain pipe, advantageously a flexible drain hose, and filled into the initially empty upper chamber at the location of the wind turbine. For large wind turbines, several of such upper chambers of oil tanks may be necessary to fill before the gearbox is entirely drained. In this case, sufficient oil tanks are provided with a capacity to take up all drain oil from the gearbox. Once, all used gearbox oil is drained from the gearbox, a pumping unit is used for pumping clean oil from the lower chamber through a filling pipe, for example a flexible filling hose, into the gearbox, while the upper chamber remains filled with the previously drained gearbox oil. The weight of the used oil in the upper chamber is exerting pressure on the clean oil in the lower chamber and thereby assists the pumping unit in extracting the clean oil from the lower chamber, which prevents or at least minimizes the risk for cavitation of the pumping unit.

Optionally, the drain pipe and the filling pipe are identical. A switch-over manifold or valve system is then used to switch from the drain function to the filling function. In some embodiment, the drain pipe and the filling pipe are different, but the two pipes are contained inside a sleeve, also called an umbilical, such that the two pipes are lifted up to the nacelle together. In this case, the filling pipe is a flexible filling hose, and the drain pipe is a flexible drain hose. An umbilical is described in International Patent Application WO2014/169918 by Ocean Team Group AS.

The clean oil is typically new, unused oil, however, it may also be cleaned, filtered, and recycled oil.

For example, the method comprises providing the pumping unit and providing the filling pipe of a length that reaches up to the nacelle from the oil tank on a ground location at the wind turbine tower or from the platform.

In some embodiments, the drain pipe or the filling pipe or both are part of the installation of the wind turbine, for example extending along the inner wall of the tower from the nacelle to the platform or the ground. In this case, the filing pipe or the drain pipe or both are stiff pipes or flexible hoses. Alternatively, the drain pipe or the filling pipe or both are provided separately from the wind turbine and one end thereof is lifted by a hoist up to the nacelle and to the gearbox. In the case of a pipe being provided for being lifted up by the hoist, it is as a flexible hose. For example, for offshore wind turbines, the drain pipe or the filling pipe or both are brought by a vessel, lifted in rolled conditions onto the platform, unrolled on the platform during lifting of one end thereof by the hoist up to the nacelle for the oil change. After oil change, the corresponding pipe, which is a flexible hose, is lowered again, rolled into a compact configuration on the platform, and the roll lifted from the platform back to the vessel. Optionally, the filling hose is provided inside a sleeve that is lifted up instead of lifting the hose itself. Such a sleeve is typically called an umbilical. Optionally, it also contains a drain hose such that both hoses are lifted together up to the nacelle.

The crane is optionally provided on the ground, for example on a truck, and reaches up to the nacelle. Alternatively, the hoist of the wind turbine is used for lifting the pipe up to the gearbox. For off-shore wind turbines, typically, a hoist is provided at the nacelle, which is then conveniently used for lifting up the hose or hoses. The pumping unit would then conveniently be located on the platform with which the offshore wind turbine is provided above sea level.

If the gearbox needs more oil than contained in a single oil tank, the pumping unit may be connected to the oil tanks one after the other. Alternatively, the pumping unit may be connected simultaneously to a plurality of oil tanks through a manifold such that no decoupling of oil pipes is necessary during the filling of the gearbox, which assures a smooth and continuous filling of the gearbox with oil.

For example, the method comprises transporting the oil tank with a sea vessel to the wind turbine, which is an off-shore wind turbine with a platform at the lower part of the tower, and lifting the oil tank, while the lower chamber is filled with clean oil and the upper chamber is empty, from the vessel onto the platform. After performing the oil change at the wind turbine, the oil tank, while the upper chamber is filled with used oil and the lower chamber is empty, is lifted from the platform onto the vessel and transported to a location remote from the wind turbine.

Optionally, the upper chamber comprises a first pipe connector at a top of the upper chamber, and the lower chamber comprises a second pipe connector at a bottom of the lower chamber. Especially, the first pipe connector is extending through a wall of the upper chamber at a top of the upper chamber, and the lower chamber comprising a second pipe connector that is extending through a wall of the lower chamber at a bottom of the lower chamber. This way, the filling of the upper chamber and the drain of the lower chamber is facilitated. Advantageously, the first pipe connector or the second pipe connector or both comprise a valve for preventing unintended flow of oil out of the chambers. Such valve can be opened or closed, potentially by an automatic mechanism, during filling and emptying. Alternatively, it is a manually operated valve. Another example of a useful valve is a one way check valve that prevents unintended emptying of the corresponding chamber. For emptying, such valve can be provided demountable. Alternatively, the one way check valve is provided with a release mechanism that is configured for release of the one way check valve function when emptying of the upper chamber or when filling of the lower chamber or both.

In further embodiment, the oil tank comprises a strap arrangement with straps for lifting the oil tank. The straps extend along opposite side walls of the oil tank and across a bottom of the lower chamber for supporting the lower chamber during lifting. Advantageously, the strap arrangement comprises a lift connector, for example sling or eyelets, for engaging with a lifting device from a hoist or crane, for example a hook or a lifting rope.
As an alternative for lifting the oil tank, it is provided in combination with a separate bag having a size sufficiently large to accommodate the oil tank. Optionally, such bag is provided with a solid drip tray at the bottom of the bag, for example having a height in the order of 20 cm, for preventing oil spills, which adds to the safety features. The transport bag, with the exception of the optional drip tray, is advantageously made of heavy duty textile in the sense that it is stable enough for lifting it with the oil tank inside, even when having a weight of 0.25 tons or half a ton or even more. Such bags are provided with an upper opening through which the oil tank is inserted. The upper opening, optionally, is provided with a closure, for example a zipper or Velcro closure. A Velcro closure is well known and provides a safe and water tight closure, adding to the safety measures. To recall, a Velcro closure comprises two oppositely provided strips of thin plastic sheet, one covered with tiny loops and the other with tiny flexible hooks, which adhere when pressed together and can be separated when pulled apart deliberately.

Although, the method has been described with the wind turbine as an example, the oil tanks can also be used for change of oil in other apparatuses, for example gearboxes in power plants or large ships. The double chamber tanks are especially useful for high viscous lubrication oil which has a resistance against fast flow through the second pipe connector. Higher viscosity is the case at low temperature, why the tanks are especially useful for outdoor application. Although, the pipe connectors can be made with large diameter for ease of flow through them by the highly viscous oil, it is pointed out that an important feature is low weight of the oil tanks, such that also the pipe connectors are advantageously small and of relatively light weight.

### SHORT DESCRIPTION OF THE DRAWINGS

The invention will be explained in more detail in the following with reference to the drawing, where
- FIG. 1: is a drawing of a double-chamber tank for oil change with vertical walls, where a) is a shaded perspective view, b) is a bottom view, c) is a side view, and d) a cross sectional view;
- FIG. 2: is a drawing of a double-chamber tank for oil change with inclined walls, where a) is a shaded perspective view, b) is a bottom view, c) is a side view, and d) a cross sectional view;
- FIG. 3: is a drawing of the tank of FIG. 1 in a supporting box;
- FIG. 4: is a drawing of the tank of FIG. 2 in a supporting box;
- FIG. 5: is a drawing of the principle of the use of the box of FIG. 2 for oil exchange;
- FIG. 6: illustrates a wind turbine with a platform and a hoist that is in the process of lifting the tube from a pumping unit into the nacelle and with a vessel beside the platform, where a) is an overview image, b) an enlarged perspective view, and c) a close of view of the platform;
- FIG. 7: is an example of a transport bag that is also suitable for lifting the oil tank, in perspective view a) from above, b) from below, and c) with an oil tank inside.

### DETAILED DESCRIPTION / PREFERRED EMBODIMENT

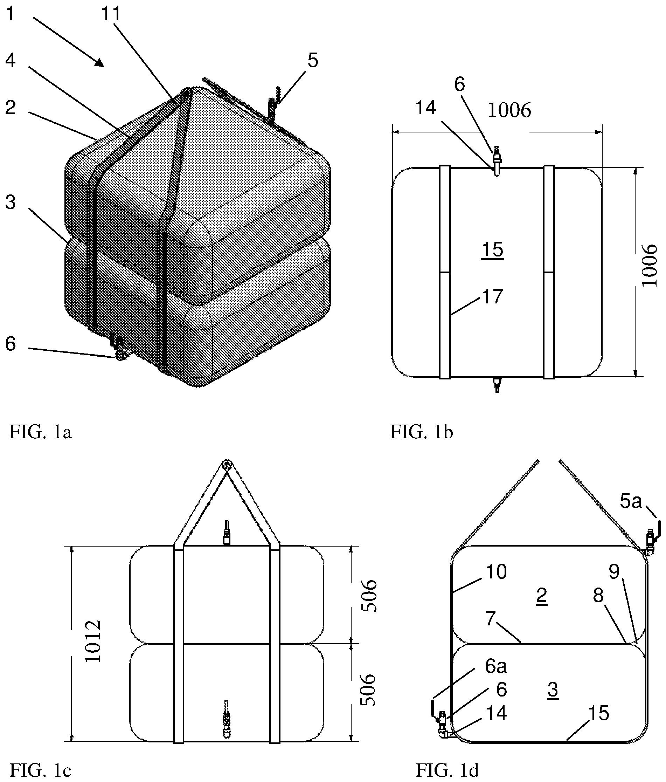

FIG. 1 is a drawing of a double chamber oil tank 1 useful for oil exchange in a gearbox of a wind turbine. However, the oil tank 1 can also be used for oil exchange of other apparatuses, including other large-scale gearboxes, for example in power plants, and also large-scale engines.

Typically, the total capacity of the double chamber oil tank is in the range of 0.5 to 1 cubic meter, the latter being indicated by the dimensions in the drawing, which, however, are only for purpose of exemplary illustration and not limiting for the invention. For example, a practical total capacity of such double chamber oil tank is between 0.25 and 2 cubic meter.

The double chamber oil tank 1 comprises a first chamber 2 and a second chamber, 3, which are connected to each other with an intermediate separating wall 7. The first and second chambers are provided in a flexible material, for example a polymer foil, optionally fibre-reinforced polymer foil. Suitable is a flexible laminate of fabric and polymer foil, as it is commonly used for tarpaulins. Such material can be joined by sewing, gluing or welding or a combination thereof. Due to this flexible material, both chambers are collapsible when not filled with liquid. Also, the polymer is selected to be chemically resistant against lubricating oil, for example selected from polyurethane (PU), polyvinylchloride (PVC), polyester (PET) or polyolefin, for example, polyethylene (PE) or polypropylene (PP).

A strap arrangement 4 is attached to the oil tank, for example by gluing, welding, or sewing, for lifting the oil tank 1 and for controlling its position and orientation. The strap arrangement 4 comprises a sling 11 for lifting the tank 1 with a hook from a crane (not shown). This loop 11 defines the upwards direction of the tank 1, and, accordingly, the loop 11 is closer to the first chamber 2 than to the second chamber 3. Although, the tank 1 as such can be tilted and turned, it is justified to call the first chamber 2 an upper chamber and the second chamber 3 a lower chamber, because this refers to the orientation during proper use and function of the oil tank 1. This terminology will be used throughout the description. The strap arrangement 4 comprises straps 17 that extend along the side wails from the top to the bottom of the oil tank 1 and around and across the bottom wall 15 for stability during lifting.

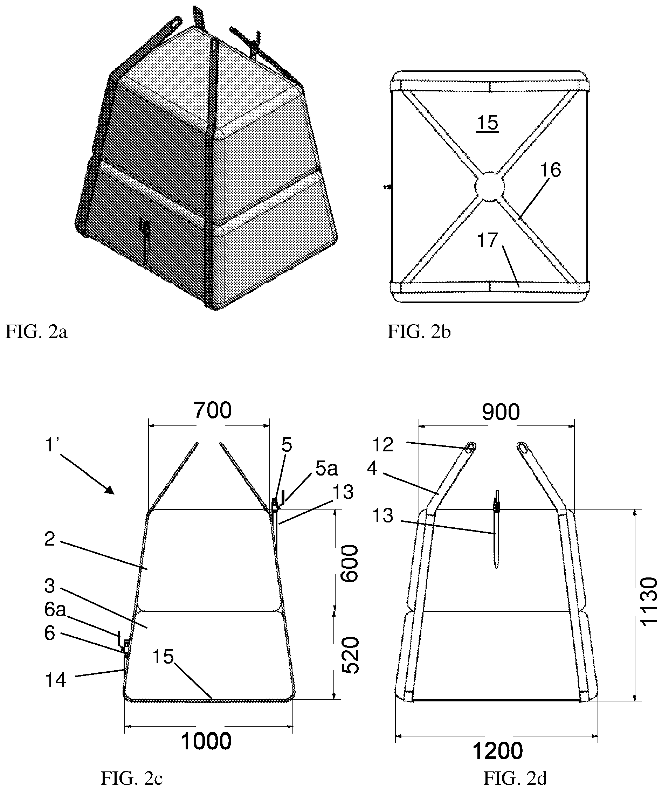

An alternative embodiment of a double chamber oil tank 1' is illustrated in FIG. 2, where the upper and lower chambers 2, 3 have straight and inclined walls such that the horizontal cross section narrows gradually from the bottom of a chamber towards the top of a chamber. Also, in this case, the dimensions in the drawing are only for purpose of exemplary illustration and not limiting for the invention. The straps 4 in this embodiment do not form a loop as in FIG. 1 but are provided with eyelets 12 on each of the straps. To these eyelets 12, a loop can be attached for a crane hook or some other type of lifting equipment for easy and safe lifting of the oil tank.

As shown in more detail in FIG. 2b, the bottom 15 wall of the lower chamber 3 comprises reinforcement straps 16 for stabilizing the bottom wall 15, where the reinforcement straps are arranged in cross-shape from one corner to the opposite corner of the bottom wall 15.

In the shown embodiment of FIG. 1 and FIG. 2, the two chambers 2, 3 are attached to each other by gluing or sewing 8 in order to provide mutual stability. This results in a narrowing waist 9 between the chambers 2, 3.

Alternatively, this waist 9 is avoided and a straight transition is provided between the outer walls of the two chambers 2, 3. For example, the double chamber oil tank 1 is provided as a single tank having smooth side walls without waist and where the tank comprises a diaphragm wall that is separating the two chambers. Optionally, the diaphragm wall is elastic and expands during filling of the upper chamber and emptying of the lower chamber until the diaphragm wall constitutes a bladder with used oil that fills the lower chamber.

As a further alternative to the straight vertical outer walls 10, the walls are provided in zig-zig shape as a bellows for controlled collapse of the chamber 2, 3 in the vertical direction.

The upper chamber 2 comprises a first pipe connector 5 that communicates through a first tube 13 with the interior volume of the upper chamber 2 and is used for filling and emptying of only the upper chamber; and the lower chamber 3 comprises a second pipe connector 6 that communicates through a second tube 14 with the interior volume of the lower chamber 3 for filling and emptying of only the lower chamber 3. The first pipe connector 5 is provided at the top of the upper chamber 2 in order to facilitate filling of the upper chamber during operation. The second pipe connector 6 is provided at the bottom of the lower chamber 3 in order to facilitate emptying of the lower chamber. The first pipe connector 5 and/or the second pipe connector 6 are advantageously provided with valve 5a, 6a for preventing unintended extraction and spill of oil. As illustrated in FIG. 1d and FIG. 2c, the valve 5a, 6a can be equipped with a handle for operating the valve. Alternatively, the valve works automatically when connecting or disconnecting a hose.

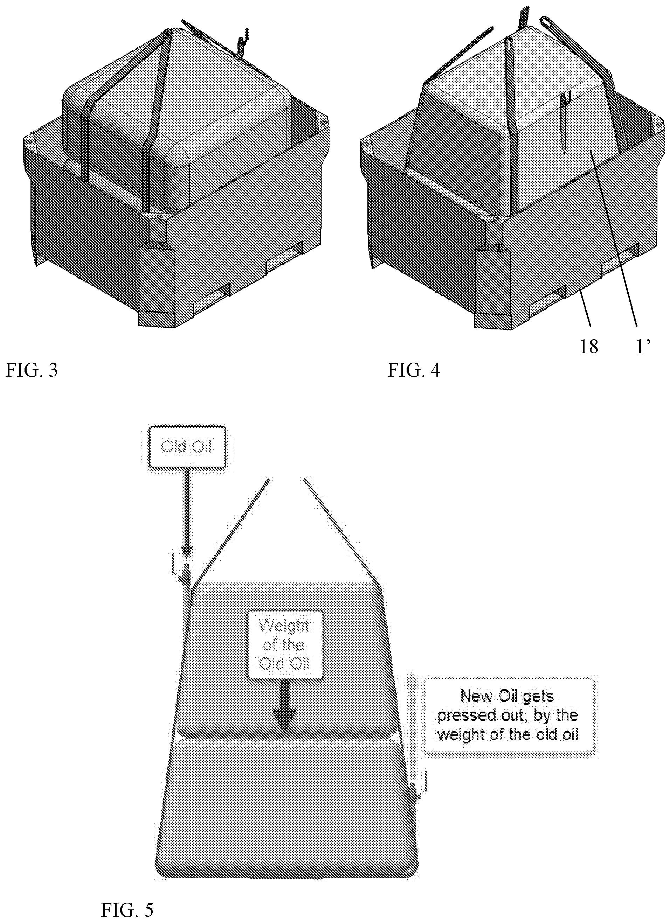

The use and functioning of the oil tank 1 is explained in more detail for a general apparatus in connection with FIG. 5 for the event of changing oil in the apparatus (not shown), for example a gearbox of a wind turbine, a gearbox of a power plant or a large ship engine. The oil tank 1 is provided with clean, unused oil in the lower chamber 3, typically high viscous oil, for example gear oil or hydraulic oil, and with the upper chamber 2 empty and collapsed. From the oil-filled apparatus, especially the gearbox of a wind turbine, used oil is extracted and filled into the upper chamber 2 through the first pipe connector 5. Once, the used oil from the apparatus is completely extracted, and the upper chamber 2 is filled or partially filled, clean oil is filled from the lower chamber 3 into the apparatus through the second pipe connector 6. The weight of the used oil in the upper chamber 2 puts pressure by gravity onto the lower chamber 3, which facilitates emptying the lower chamber 3.

The pipe connectors 5, 6 are typically dimensioned for pipes with an inner diameter of between 1 and 3 cm, for example a pipe of one half inch (1.27) or one inch (2.54 cm).

The facilitated emptying of the lower chamber 3 is advantageous in the case of the oil being highly viscous, as it is the case for gear oil or oil for large ship engines. In this connection, it is pointed out that the viscosity is temperature dependent and is increased in case that the oil change of an offshore wind turbine gearbox is done at low environmental temperature. In case that the clean oil is emptied from the lower chamber at insufficient speed, there is a risk of cavitation in the pumping unit that is connected to the pipe connector 6 of the lower chamber 3. The gravity pressure of the upper chamber 3 onto the lower chamber 2 assist in emptying the lower chamber 3 and therefore reduced the risk for pump cavitation.

For example, if the upper container 2 contains 500 kg of oil on an area of 100cm x 100cm = 10,000 cm, the increase in pressure is 500/10,000=0.05 atmosphere. Although, this seems low, it has shown, surprisingly in practice, that this reduces substantially the risk for cavitation. The reason is the low sucking power of the pump, irrespective of the fact that the pump can pump with high pressure, optionally with more than 100 bars

FIG. 3 and 4 illustrate embodiments, in which the collapsible oil tank is placed in a stiff container 18, the container having a bottom and side walls but is open upwards for easy removal of the oil tank therefrom. Such container in the form of a tub is provided order for additional safety for the collapsible oil tanks. The oil tank is not attached to the tub but loosely accommodated therein and is easily lifted out therefrom. For example, the tub-shaped containers are of the kind that can be inter-stacked by receiving one container inside the next container such that space for transportation is minimized.

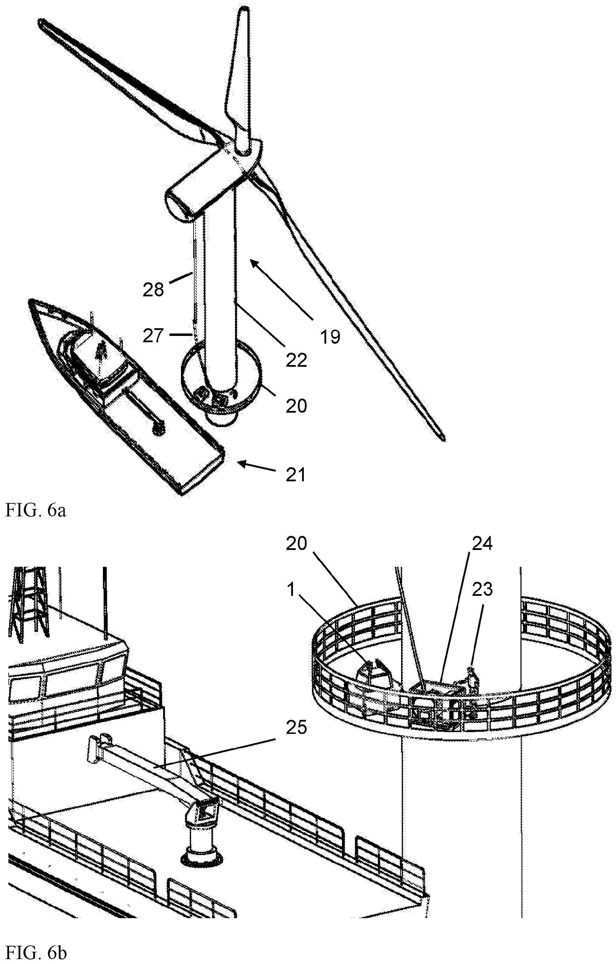

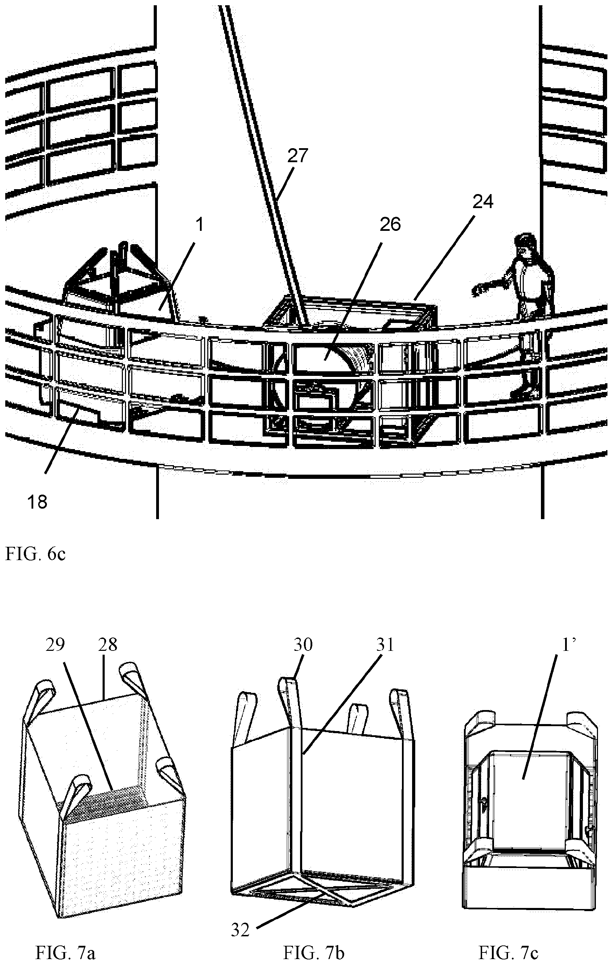

A possible procedure for oil changing of an offshore wind turbine 19 is as follows with reference to FIG. 6. The overview drawing in FIG. 6a shows an offshore wind turbine with a platform 20 beside which a vessel 21 on sea is located. Typically, the platform 20 of the wind turbine 19 extends around the lower part of the tower 22 at a height above sea such that waves do not reach the platform. As shown in greater detail in FIG. 6b, the platform 20 is used by personnel 23 performing the oil change. From the vessel 21, which is equipped with a vessel crane 25, an oil tank 1 and a pumping unit 24 has been lifted onto the platform 20.

Optionally, also a stack of tubs 18 is provided, onto the platform 20. The oil tanks 1 are then lifted into the tubs 18 either by the vessel-crane 25 or by the hoist at the nacelle of the wind turbine. Alternatively, the oil tanks are lifted onto the platform by the vessel-crane when already placed in such tubs. Such tub 18 within which an oil tank 1 is placed is better seen in the further enlarged image FIG. 6c.

The pumping unit 24 is compact and comprises a drum 26 from which there is unrolled an umbilical 27, which is a commonly used term in the technical field and covers a tube, inside which the filling hose is provided.

Prior to filling the gearbox by the pumping unit 24 with the clean oil from the lower chamber 3, the gearbox must be drained from the used oil. For this, a drain pipe is provided from the gearbox to the upper chamber 2 of the oil tank 1' into which the used oil is filled. Once filled, the weight of the used oil will drive the clean oil out of the lower chamber, assisting the pumping unit to suck the oil into the pumping unit 24 by which the oil is pumped up to the nacelle, for example between 60 and 150 meters higher up.

Optionally, also, the drain hose is located inside the umbilical 27 in case that the wind power turbine installation does not comprise a drain pipe from the gearbox in the nacelle and to the platform, for example installed along the inside or outside tower surface.

Alternatively, the drum 26 only comprises the filling hose for unrolling, and the wind turbine has a drain hose installed. The illustration in FIG. 6 covers all these alternatives.

The pumping unit 24 is furthermore provided with a first hose (not shown) that is connected to the pipe connector 6 of the lower chamber 3 of the oil tank 1 in order to receive clean oil therefrom which is then pumped by the pumping unit through the filling hose up to the gearbox in the nacelle. One end of the filling tube, optionally inside an umbilical 27, is lifted from the platform 20 by the hoist 28 of the wind turbine 19 up to the nacelle, as illustrated in FIG. 6a. Once, this filling hose is inside the gearbox, oil can be filled from the lower chamber 3 of the oil tank 1' into the gearbox via the pumping unit 24.

As illustrated, the pumping unit 24 is a mobile unit that is brought by the vessel 21 and lifted onto the platform 22. However, it is also possible that the pumping unit 24 is part of the installation of the wind turbine 19.

Typically, the crane of the sea vessel is used for lifting the oil tank 1, 1', and optionally also the pumping unit 24, onto the platform 20 from the vessel. However, in some instances, the wind turbine installation comprises a hoist at the platform in addition to the hoist in the nacelle. It is thus possible to use this platform hoist for lifting oil tanks and the pumping unit onto the platform from the sea vessel, and back onto the vessel, once the oil change has been performed.

Gearboxes from offshore wind turbines, typically, have a an oil volume of 700-1500 litres, which would require 3 tanks of a size of 1000 litres, because each such tank has a volume of 500 litres of clean oil. If smaller or larger oil tanks are used, the number of tanks scales accordingly.
An alternative or additional safety feature is a transport bag inside with the oil tank 1' is transported and lifted. This substitutes the strap arrangement 4 of the oil tank 1, 1' or adds to it. An example is illustrated in FIG. 7, showing a useful bag 28 in a perspective view a) from above, b) from below and c) with an oil tank inside. Such bag 28 is optionally provided with a liquid tight, drip tray 29, for example made of plastics, optionally in a rigid polymer material, for taking up possibly spilled oil from the oil tank (1, 1'). The drip tray is dimensioned to accommodate the oil tank (1, 1'). A suitable height is in the order of 10-20 cm. The transport bag 28, with the exception of the optional drip tray 29, is made of heavy duty textile and has a lifting connector, for example slings 30, for lifting it by a crane or hoist with the oil tank 1 inside. As shown in FIG. 7, the slings are part of a strap arrangement 31 of the bag, the strap arrangement 31 having a cross-over 32 under the bag and under the drip tray 29 in order to add to safety when lifting the bag 28. Such bags 28 are, optionally, provided with an upper opening having a closure, for example a Velcro closure.

## Claims

1. A method for changing oil in the gearbox of a wind turbine (19); wherein the wind turbine (19) comprises a tower (22), a rotor, a nacelle, and electricity generator, the rotor being functionally connected to the generator through the gearbox; the method comprising
- providing a transportable oil tank (1) at the wind turbine, the oil tank (1) being made of a flexible and collapsible polymer sheet material and comprises an empty upper chamber (2) and a lower chamber (3) filled with clean oil, the upper chamber (2) being provided on top of the lower chamber (3) for exerting gravity pressure on the lower chamber (3) when the upper chamber (2) is filled with oil;
- connecting a drain pipe to the gear box and to the upper chamber (3) and draining used oil from the gearbox through the drain pipe and into the upper chamber (2);
- after filling of the upper chamber (2) with the used oil, extracting clean oil from the lower chamber (3) by a pumping unit, the extraction being assisted by the gravity pressure of the used oil in the upper chamber (2) on the collapsible lower chamber (3) for minimizing a risk for cavitation of the pumping unit, and pumping clean oil with the pumping unit from the lower chamber (3) through a filling pipe up to the nacelle and into the gearbox,
further comprising transporting the oil tank (1) with a vessel (21) on sea to the wind turbine (19), which is an off-shore wind turbine with a platform (20) at the lower part of the tower (22), and lifting the oil tank (1), while the lower chamber (3) is filled with clean oil and the upper chamber (2) is empty, from the vessel (21) onto the platform (20); performing the oil change at the wind turbine (19); subsequently, lifting the oil tank (1), while the upper chamber (2) is filled with used oil and the lower chamber (3) is empty, from the platform (20) onto the vessel (21) and transporting the oil tank (1) with the vessel (21) to a location remote from the wind turbine (19).

2. A method according to claim 1, further comprising transporting a pumping unit (24) with the vessel (21) to the wind turbine (19) and lifting the pumping unit (24) from the vessel (21) onto the platform (20), performing the oil change at the wind turbine (19), and subsequently lifting the pumping unit (24) back to the vessel (21).

3. A method according to claim 2, further comprising providing a filling pipe on the vessel (21), the filling pipe being a flexible filling hose in a rolled configuration, transporting the filling hose to the offshore wind turbine (19), lifting it in a rolled configuration onto the platform (20), unrolling the filling hose and lifting one end thereof with a hoist (28) of the offshore wind turbine (19) up to the nacelle, and performing the oil change; after the oil change, lowering the filling hose back to the platform by the hoist, rolling the filling hose into a compact roll and lifting the roll from the platform back to the vessel (21).

4. A method according to claim 3, wherein the pumping unit (24) is provided with a rotatable drum (26) onto which the filling hose is provided in rolled condition at the time the pumping unit (24) is lifted onto the platform (20) from the vessel (21) and wherein method comprises rolling off the lifting hose from this drum (26) for the filling the gearbox and rolling it back unto the drum (26) after oil change and prior to lifting the pump unit (24) back onto the vessel (21).

5. A method according to any preceding claim, further comprising filling clean lubricating gearbox oil into the lower chamber (3) and then, after filling, transporting the oil tank to the wind turbine (19).

6. A method according to any preceding claim, wherein the method comprises providing a transport bag (28) with a lifting connector (30) for lifting the transport bag (28) by a crane (25) or hoist (28), the transport bag (28) having a lifting capacity of at least 500 kg, inserting the oil tank (1, 1') into the transport bag, and lifting the transport bag (28) onto the platform (20) from the vessel (21).

7. An oil tank for a method according to any preceding claim, the oil tank (1, 1') comprising an upper chamber (2) and a lower chamber (3), the oil tank further comprising a separating wall (7) in between the upper chamber (2) and the lower chamber (3); the upper chamber (2) being provided on top of the lower chamber (3) for exerting gravity pressure on the lower chamber (3) when the upper chamber (2) is filled with oil; the upper chamber (2) comprising a first pipe connector (5) that is extending through a wall of the upper chamber at a top of the upper chamber (2), and the lower chamber (3) comprising a second pipe connector (6) that is extending through a wall of the lower chamber at a bottom of the lower chamber (3), **characterized in that** the oil tank is made of a flexible and collapsible material with both chambers (2, 3) being made of a flexible and collapsible polymer sheet material; wherein the upper chamber has a first volume of at least 125 litres and the lower chamber has a second volume of at least 125 litres, wherein the walls through which the first pipe connector (5) and the second pipe connector (6) extend are flexible walls.

8. An oil tank according to claim 7, wherein the first pipe connector (5) or the second pipe connector (6) or both are provided with a valve (5a, 6a) for preventing unintended flow of oil out of the chambers (2, 3).

9. An oil tank according claim 7 in combination with a transport bag (28) that is accommodating the oil tank inside the transport bag (28), wherein transport bag (28) comprises a lifting connector (30) at its top for lifting the transport bag (28) by a crane (25) or hoist (28), the transport bag (28) having a lifting capacity of at least 500 kg, wherein the transport bag comprises a liquid tight drip tray (29) in the bottom of the transport bag (28), the drip tray accommodating a bottom of the oil tank (1, 1').

10. Use of an oil tank according to claim 7 for change of oil in a gearbox of an offshore wind turbine (19).

## Patentansprüche

1. Verfahren zum Wechseln von Öl im Getriebe einer Windturbine (19); wobei die Windturbine (19) einen Mast (22), einen Rotor, eine Gondel und einen Stromgenerator umfasst, wobei der Rotor über das Getriebe mit dem Generator funktionsmäßig verbunden ist; wobei das Verfahren folgende Schritte umfasst
- Bereitstellen eines transportierbaren Öltanks (1) an der Windturbine, wobei der Öltank (1) aus einem biegsamen und zusammenklappbaren Polymerschichtmaterial hergestellt ist und eine leere obere Kammer (2) und eine untere Kammer (3), die sauberem Öl gefüllt ist, umfasst, wobei die obere Kammer (2) über der unteren Kammer (3) bereitgestellt wird, um einen Gravitationsdruck auf die untere Kammer (3) auszuüben, wenn die obere Kammer (2) mit Öl gefüllt wird;
- Verbinden eines Abflussrohrs mit dem Getriebe und der oberen Kammer (3) und Ablaufenlassen von Altöl aus dem Getriebe durch das Abflussrohr hindurch und in die obere Kammer (2);
- nach dem Füllen der oberen Kammer (2) mit dem Altöl, Entnehmen von sauberem Öl aus der unteren Kammer (3) durch eine Pumpeinheit, wobei die Entnahme durch den Gravitationsdruck des Altöls in der oberen Kammer (2) auf die zusammenklappbare untere Kammer (3) unterstützt wird, um ein Risiko von Kavitation der Pumpeinheit zu minimieren, und Pumpen von sauberem Öl mit der Pumpeinheit aus der unteren Kammer (3) durch ein Füllrohr hindurch bis nach oben zur Gondel und in das Getriebe,
ferner umfassend das Transportieren des Öltanks (1) mit einem Schiff (21) auf See bis zur Windturbine (19), bei der es sich um eine Offshore-Windturbine mit einer Plattform (20) am unteren Teil des Mastes (22) handelt, und Heben des Öltanks (1), während die untere Kammer (3) mit sauberem Öl gefüllt wird und die obere Kammer (2) leer ist, von dem Schiff (21) auf die Plattform (20); Ausführen des Ölwechsels an der Windturbine (19); anschließend Heben des Öltanks (1), während die obere Kammer (2) mit Altöl gefüllt wird und die untere Kammer (3) leer ist, von der Plattform (20) auf das Schiff (21) und Transportieren des Öltanks (1) mit dem Schiff (21) an einen Standort, der von der Windturbine (19) entfernt ist.

2. Verfahren nach Anspruch 1, ferner umfassend das Transportieren einer Pumpeinheit (24) mit dem Schiff (21) zur Windturbine (19) und das Heben der Pumpeinheit (24) von dem Schiff (21) auf die Plattform (20), das Ausführen des Ölwechsels an der Windturbine (19), und anschließend das Heben der Pumpeinheit (24) zurück auf das Schiff (21).

3. Verfahren nach Anspruch 2, ferner umfassend das Bereitstellen eines Füllrohrs auf dem Schiff (21), wobei das Füllrohr ein biegsamer Füllschlauch in einer aufgerollten Konfiguration ist, das Transportieren des Füllschlauchs bis zur Offshore-Windturbine (19), das Heben desselben in einer aufgerollten Konfiguration auf die Plattform (20), das Abrollen des Füllschlauchs und das Heben eines Endes desselben mit einem Hebezeug (28) der Offshore-Windturbine (19) nach oben bis zur Gondel, und das Ausführen des Ölwechsels; nach dem Ölwechsel, das Absenken des Füllschlauchs zurück auf die Plattform durch das Hebezeug, das Aufrollen des Füllschlauchs in eine platzsparende Rolle und das Heben der Rolle von der Plattform zurück auf das Schiff (21).

4. Verfahren nach Anspruch 3, wobei die Pumpeinheit (24) mit einer drehbaren Trommel (26) versehen ist, auf welcher der Füllschlauch zum Zeitpunkt des Hebens der Pumpeinheit (24) von dem Schiff (21) auf die Plattform (20) in einem aufgerollten Zustand bereitgestellt wird, und wobei das Verfahren das Abrollen des Hebeschlauchs von dieser Trommel (26) zum Füllen des Getriebes und das Wiederaufrollen desselben auf die Trommel (26) nach dem Ölwechsel und vor dem Heben der Pumpeinheit (24) zurück auf das Schiff (21) umfasst.

5. Verfahren nach einem der vorhergehenden Ansprüche, ferner umfassend das Füllen von sauberem Getriebeschmieröl in die untere Kammer (3) und dann, nach dem Füllen, das Transportieren des Öltanks zur Windturbine (19).

6. Verfahren nach einem der vorhergehenden Ansprüche, wobei das Verfahren das Bereitstellen eines Transportsacks (28) mit einem Hebeverbindungsstück (30) zum Heben des Transportsacks (28) durch einen Kran (25) oder ein Hebezeug (28), wobei der Transportsack (28) eine Hebekapazität von mindestens 500 kg aufweist, das Einfügen des Öltanks (1, 1') in den Transportsack, und das Heben des Transportsacks (28) vom Schiff (21) auf die Plattform (20) umfasst.

7. Öltank für ein Verfahren nach einem der vorhergehenden Ansprüche, wobei der Öltank (1, 1') eine obere Kammer (2) und eine untere Kammer (3) umfasst, wobei der Öltank ferner eine Trennwand (7) zwischen der oberen Kammer (2) und der unteren Kammer (3) umfasst; wobei die obere Kammer (2) über der unteren Kammer (3) bereitgestellt wird, um einen Gravitationsdruck auf die untere Kammer (3) auszuüben, wenn die obere Kammer (2) mit Öl gefüllt wird; wobei die obere Kammer (2) ein erstes Rohrverbindungsstück (5) umfasst, das sich durch eine Wand der oberen Kammer an einem oberen Ende der oberen Kammer (2) hindurch erstreckt, und wobei die untere Kammer (3) ein zweites Rohrverbindungsstück (6) umfasst, das sich durch eine Wand der unteren Kammer auf einem Boden der unteren Kammer (3) hindurch erstreckt, **dadurch gekennzeichnet, dass** der Öltank aus einem biegsamen und zusammenklappbaren Material hergestellt ist, wobei die beiden Kammern (2, 3) aus einem biegsamen und zusammenklappbaren Polymerschichtmaterial hergestellt sind; wobei die obere Kammer ein erstes Volumen von mindestens 125 Litern aufweist und die untere Kammer ein zweites Volumen von mindestens 125 Litern aufweist, wobei die Wände, durch die sich das erste Rohrverbindungsstück (5) und das zweite Rohrverbindungsstück (6) hindurch erstrecken, biegsame Wände sind.

8. Öltank nach Anspruch 7, wobei das erste Rohrverbindungsstück (5) oder das zweite Rohrverbindungsstück (6) oder beide mit einem Ventil (5a, 6a) versehen ist bzw. sind, um einen ungewollten Ölfluss aus den Kammern (2, 3) zu verhindern.

9. Öltank nach Anspruch 7 kombiniert mit einem Transportsack (28), der den Öltank im Innern des Transportsacks (28) aufnimmt, wobei der Transportsack (28) ein Hebeverbindungsstück (30) an seinem oberen Teil zum Heben des Transportsacks (28) durch einen Kran (25) oder ein Hebezeug (28) umfasst, wobei der Transportsack (28) eine Hebekapazität von mindestens 500 kg aufweist, wobei der Transportsack eine flüssigkeitsdichte Tropfwanne (29) im Boden des Transportsacks (28) umfasst, wobei die Tropfwanne einen Boden des Öltanks (1, 1') aufnimmt.

10. Verwendung eines Öltanks nach Anspruch 7 zum Wechseln von Öl in einem Getriebe einer Offshore-Windturbine (19).

## Revendications

1. Procédé de changement d'huile dans la boîte à engrenages d'une éolienne (19) ; dans lequel l'éolienne (19) comprend une tour (22), un rotor, une nacelle et une génératrice d'électricité, le rotor étant raccordé fonctionnellement à la génératrice par le biais de la boîte à engrenages ; le procédé comprenant :
- la fourniture d'un réservoir d'huile transportable (1) au niveau de l'éolienne, le réservoir d'huile (1) étant composé d'un matériau en feuille polymère souple et compressible et comprend une chambre supérieure vide (2) et une chambre inférieure (3) remplie d'huile propre, la chambre supérieure (2) étant prévue au-dessus de la chambre inférieure (3) pour exercer une pression gravitationnelle sur la chambre inférieure (3) lorsque la chambre supérieure (2) est remplie d'huile ;
- le raccordement d'un tuyau de vidange à la boîte à engrenages et à la chambre supérieure (3) et la vidange de l'huile usagée de la boîte à engrenages à travers le tuyau de vidange et dans la chambre supérieure (2) ;
- après remplissage de la chambre supérieure (2) avec l'huile usagée, l'extraction de l'huile propre de la chambre inférieure (3) par une unité de pompage, l'extraction étant assistée par la pression gravitationnelle de l'huile usagée dans la chambre supérieure (2) sur la chambre inférieure (3) compressible pour minimiser un risque de cavitation de l'unité de pompage, et le pompage de l'huile propre avec l'unité de pompage de la chambre inférieure (3) à travers un tuyau de remplissage jusqu'à la nacelle et dans la boîte à engrenages,
comprenant en outre le transport du réservoir d'huile (1) avec un navire (21) sur mer jusqu'à l'éolienne (19), laquelle est une éolienne en mer dotée d'une plate-forme (20) au niveau de la partie inférieure de la tour (22), et le levage du réservoir d'huile (1), alors que la chambre inférieure (3) est remplie d'huile propre et que la chambre supérieure (2) est vide, depuis le navire (21) sur la plate-forme (20) ; la réalisation du changement d'huile au niveau de l'éolienne (19) ; par la suite, le levage du réservoir d'huile (1), alors que la chambre supérieure (2) est remplie d'huile usagée et que la chambre inférieure (3) est vide, depuis la plate-forme (20) sur le navire (21) et le transport du réservoir d'huile (1) avec le navire (21) vers un emplacement éloigné de l'éolienne (19).

2. Procédé selon la revendication 1, comprenant en outre le transport d'une unité de pompage (24) avec le navire (21) vers l'éolienne (19) et le levage de l'unité de pompage (24) depuis le navire (21) sur la plate-forme (20), la réalisation du changement d'huile au niveau de l'éolienne (19), et par la suite, le levage de l'unité de pompage (24) pour la remettre sur le navire (21).

3. Procédé selon la revendication 2, comprenant en outre la fourniture d'un tuyau de remplissage sur le navire (21), le tuyau de remplissage étant un flexible de remplissage dans une configuration enroulée, le transport du flexible de remplissage vers l'éolienne en mer (19), le levage de celui-ci dans une configuration enroulée sur la plate-forme (20), le déroulage du flexible de remplissage et le levage d'une extrémité de celui-ci avec un treuil (28) de l'éolienne en mer (19) jusqu'à la nacelle, et la réalisation du changement d'huile ; après le changement d'huile, l'abaissement du flexible de remplissage pour le remettre sur la plate-forme par le biais du treuil, l'enroulage du flexible de remplissage en un rouleau compact et le levage du rouleau depuis la plate-forme pour le remettre sur le navire (21).

4. Procédé selon la revendication 3, dans lequel l'unité de pompage (24) est dotée d'un tambour rotatif (26) sur lequel le flexible de remplissage est placé dans un état enroulé au moment où l'unité de pompage (24) est levée sur la plate-forme (20) depuis le navire (21) et dans lequel le procédé comprend le déroulage du flexible de remplissage dudit tambour (26) pour le remplissage de la boîte à engrenages et le ré-enroulage de celle-ci sur le tambour (26) après le changement d'huile et avant le levage de l'unité de pompage (24) pour la remettre sur le navire (21) .

5. Procédé selon l'une quelconque des revendications précédentes, comprenant en outre le remplissage d'huile de lubrification de boîte à engrenages propre dans la chambre inférieure (3) et, ensuite, après le remplissage, le transport du réservoir d'huile vers l'éolienne (19).

6. Procédé selon l'une quelconque des revendications précédentes, dans lequel le procédé comprend la fourniture d'un sac de transport (28) avec un connecteur de levage (30) pour lever le sac de transport (28) par le biais d'une grue (25) ou d'un treuil (28), le sac de transport (28) ayant une capacité de levage d'au moins 500 kg, l'insertion du réservoir d'huile (1, 1') dans le sac de transport, et le levage du sac de transport (28) sur la plate-forme (20) depuis le navire (21).

7. Réservoir d'huile pour un procédé selon l'une quelconque des revendications précédentes, le réservoir d'huile (1, 1') comprenant une chambre supérieure (2) et une chambre inférieure (3), le réservoir d'huile comprenant en outre une paroi de séparation (7) entre la chambre supérieure (2) et la chambre inférieure (3) ; la chambre supérieure (2) étant prévue au-dessus de la chambre inférieure (3) pour exercer une pression gravitationnelle sur la chambre inférieure (3) lorsque la chambre supérieure (2) est remplie d'huile ; la chambre supérieure (2) comprenant un premier raccord de tuyau (5) qui s'étend à travers une paroi de la chambre supérieure au niveau d'une partie supérieure de la chambre supérieure (2), et la chambre inférieure (3) comprenant un second raccord de tuyau (6) qui s'étend à travers une paroi de la chambre inférieure au niveau d'une partie inférieure de la chambre inférieure (3), **caractérisé en ce que** le réservoir d'huile est composé d'un matériau souple et compressible, les deux chambres (2, 3) étant composées d'un matériau en feuille polymère souple et compressible ; dans lequel la chambre supérieure a un premier volume d'au moins 125 litres et la chambre inférieure a un second volume d'au moins 125 litres, dans lequel les parois à travers lesquelles s'étendent le premier raccord de tuyau (5) et le second raccord de tuyau (6) sont des parois souples.

8. Réservoir d'huile selon la revendication 7, dans lequel le premier raccord de tuyau (5) ou le second raccord de tuyau (6) ou les deux, sont dotés d'une valve (5a, 6a) pour empêcher un écoulement involontaire d'huile hors des chambres (2, 3).

9. Réservoir d'huile selon la revendication 7 en association avec un sac de transport (28) qui accueille le réservoir d'huile à l'intérieur du sac de transport (28), dans lequel le sac de transport (28) comprend un raccord de levage (30) au niveau de sa partie supérieure pour lever le sac de transport (28) par le biais d'une grue (25) ou d'un treuil (28), le sac de transport (28) ayant une capacité de levage d'au moins 500 kg, dans lequel le sac de transport comprend un plateau d'égouttage étanche aux liquides (29) dans la partie inférieure du sac de transport (28), le plateau d'égouttage accueillant une partie inférieure du réservoir d'huile (1, 1').

10. Utilisation d'un réservoir d'huile selon la revendication 7 pour le changement d'huile dans une boîte à engrenages d'une éolienne en mer (19).
